Europäisches Patentamt

European Patent Office

Office européen des brevets

(11) Veröffentlichungsnummer : **0 077 089**
**B1**

(12) **EUROPÄISCHE PATENTSCHRIFT**

(45) Veröffentlichungstag der Patentschrift :
07.09.88

(51) Int. Cl.⁴ : **H 04 N   7/13**

(21) Anmeldenummer : 82201199.5

(22) Anmeldetag : 24.09.82

(54) Anordnung zum Speichern oder Übertragen von transformationskodierten Bildsignalen und zum Rückgewinnen dieser Bildsignale.

(30) Priorität : 30.09.81 DE 3138816

(43) Veröffentlichungstag der Anmeldung :
20.04.83 Patentblatt 83/16

(45) Bekanntmachung des Hinweises auf die Patenterteilung : 07.09.88 Patentblatt 88/36

(84) Benannte Vertragsstaaten :
DE FR GB

(56) Entgegenhaltungen :
US-A- 3 775 602
US-A- 3 956 619
US-A- 3 981 443
US-A- 3 988 605
US-A- 4 134 134
US-A- 4 261 043
PROCEEDINGS OF THE IEEE 1979 NATIONAL AEROSPACE AND ELECTRONICS CONFERENCE NAECON 1979, Band 3, 15.-17. Mai 1979, Dayton, US, Seiten 1218-1231, IEEE, New York, US; D.J. SPENCER et al.: "A real time video bandwidth reduction system based on a CCD hadamard transform device"

(73) Patentinhaber : Philips Patentverwaltung GmbH
Wendenstrasse 35 Postfach 10 51 49
D-2000 Hamburg 1 (DE)
DE
N.V. Philips' Gloeilampenfabrieken
Groenewoudseweg 1
NL-5621 BA Eindhoven (NL)
FR GB

(72) Erfinder : Meyer-Ebrecht, Dietrich, Dr.
Jürgensallee 109
D-2000 Hamburg 52 (DE)
Erfinder : Christiansen, Jens
Franzosenheide 29a
D-2000 Hamburg 61 (DE)

(74) Vertreter : Poddig, Dieter, Dipl.-Ing. et al
Philips Patentverwaltung GmbH Wendenstrasse 35
Postfach 10 51 49
D-2000 Hamburg 1 (DE)

## Beschreibung

Die Erfindung betrifft eine Anordnung zum Speichern oder Übertragen und zum Rückgewinnen von Bildsignalen, bei der aus den durch punktweise Abtastung eines Bildes gewonnen Bildsignalen in einer Transformationsanordnung transformierte Koeffizientenwerte gewonnen und diese in einem Quantisierer in quantisierte Werte umgewandelt werden und die quantisierten Werte nach Speicherung oder Übertragung in einem Dekodierer dekodiert und die dekodierten Werte in einer Rücktransformationsanordnung in Bildsignale zurückverwandelt werden, die den ursprünglichen Bildsignalen weitgehend entsprechen, wobei die Transformationsanordnung und die Rücktransformationsanordnung jeweils zwei Bildsignale bzw. dekodierte Werte entsprechend dem Transformations-Algorithmus zu zwei Ergebniswerten verknüpft und die Ergebniswerte verschiedener Verknüpfungen jeweils stufenweise weiter verknüpft.

Für die Speicherung oder Übertragung von Bildern ist es gewünscht, möglichst wenige Informationseinheiten zu verwenden und dennoch das abgetastete Bild möglichst genau wieder darzustellen. Eine Verringerung der Anzahl Informationseinheiten ist möglich, wenn in einem Bild die vorhandene Redundanz und gegebenenfalls auch die Irrelevanz weitgehend beseitigt wird. Es ist bekannt, beispielsweise aus der Zeitschrift « IEEE Transactions on Computers », Vol. Com-19, Nr. 1, Februar 1971, Seiten 50 bis 62 oder aus dem Buch von Pratt « Digital Image Processing », John Wiley & Sons 1978, Seiten 232 bis 278, für diese Verringerung der Anzahl Informationseinheiten, d. h. für eine Datenkompression Transformationskodierverfahren mit nachfolgender Quantisierung zu verwenden. Bei der Quantisierung der Transformationskoeffizienten wird meist eine nichtlineare Kennlinie verwendet, die auf der Berechnung statistischer Mittelwerte beruht.

Bei der Transformation von Bildsignalen, wie z. B. aus US-A-4134134 bereits bekannt, tritt jedoch eine Vergrößerung des Wertebereiches der einzelnen transformierten Signale auf, wie kurz anhand einer Walsh-Hadamard-Transformation zweier Bildsignale A und B angedeutet werden soll. Die Transformation dieser beiden Bildpunkte liefert die beiden Koeffizienten

$$F(1) = A + B$$
$$F(2) = A - B$$

Wenn nun beide Bildsignale A und B den maximalen Wert hatten, hat der Koeffizient F(1) den doppelten Wert, d. h. es ist eine Verdoppelung des Wertebereiches aufgetreten. Bei der Differenzbildung entsteht durch das Vorzeichen eine Verdoppelung des Wertebereiches. Da bei der Transformation eines vollständigen Unterbildes die Bildsignale in mehreren Stufen verarbeitet werden, wobei jeweils eine Verdoppelung des Wertebereiches auftritt, ist der Wertebereich der transformierten Signale größer als der Wertebereich der Bildsignale, so daß die Datenreduktion durch die nachfolgende Quantisierung dadurch zumindest stark verringert wird. Eine einfache Verkleinerung des Wertebereiches der transformierten Signale oder Koeffizienten auf den ursprünglichen Wertebereich durch eine entsprechende Normierung der Koeffizienten würde zu unerwünschten Rundungsfehlern führen.

Aufgabe der Erfindung ist es, eine Anordnung der eingangs genannten Art anzugeben, die eine Vergrößerung des Wertebereiches der zu speichernden oder der zu übertragenden Werte gegenüber dem ursprünglichen Wertebereich der Bildsignale vermeidet, wobei gleichzeitig eine günstige Quantisierung möglich ist. Diese Aufgabe wird erfindungsgemäß dadurch gelöst, daß die Transformationsanordnung mindestens ein zusätzliches Verknüpfungselement aufweist, das das Übertragsignal des bei jeder Verknüpfung entstehenden einen Ergebniswertes und das Vorzeichensignal des anderen Ergebniswertes erhält und am Ausgang ein Hilfssignal erzeugt, das dem einen Ergebniswert als höchstwertiges Bit zugeführt wird, wobei das Bit niedrigster Wertigkeit dieses Ergebniswertes sowie das Übertragsignal und das Vorzeichensignal der Ergebniswerte für die Speicherung oder Übertragung unterdrückt werden.

Die Erfindung nutzt u. a. die Tatsache aus, daß die Ergebnisse der Summenbildung und der Differenzbildung von zwei Zahlen stets entweder beide gerade oder beide ungerade sein müssen, so daß das letzte Bit des einen der beiden Ergebniswerte weggelassen werden kann, ohne daß Information verloren geht. Auch die Verknüpfung von Übertrag und Vorzeichen der Ergebniswerte ergibt tatsächlich keine Mehrdeutigkeit, sondern die Ergebniswerte können bei der Rücktransformation eindeutig zurückgewandelt werden, wie später erläutert wird. Da auf diese Weise bei jeder Verknüpfung die Ergebniswerte nur denselben Wertebereich wie die verknüpften Werte aufweisen, haben also die zu quantisierenden Werte den gleichen Wertebereich wie die ursprünglichen Bildsignale. Das Entstehen einer durch die Transformation selbst erzeugten Redundanz wird somit vermieden, so daß zusammen mit einer Quantisierung eine optimale Datenkompression erreicht werden kann.

Bei manchen Transformations-Algorithmen, insbesondere bei der bereits genannten Walsh-Hadamard-Transformation, treten nur sehr einfache Verknüpfungen auf. Eine Ausgestaltung der Erfindung hierfür ist dadurch gekennzeichnet, daß die Transformationsanordnung die beiden Ergebniswerte jeder Verknüpfung aus der Summe und der Differenz zweier Werte bildet, daß das zusätzliche Verknüpfungselement ein Exklusiv-ODER-Glied ist und daß die Rücktransformationsanordnung jeweils einen ersten, das Bit niedrigster Wertigkeit noch enthaltenden dekodierten Wert mit einem zweiten, das Hilfssignal noch enthaltenden dekodierten Wert verknüpft und dabei die Bits des ersten Wertes um eine Stelle zur

0 077 089

niedrigeren Wertigkeit verschiebt und der vorherigen Bitstelle höchster Wertigkeit den Wert « O » zuordnet und das Bit niedrigster Wertigkeit als Übertragsignal für die niedrigste Stelle bei der Summenbildung verarbeitet. Dabei ergibt sich also eine sehr einfache Ausbildung des zusätzlichen Verknüpfungselementes, das unabhängig von dem Wertebereich der Bildsignale ist, und auch bei der Rücktransformation werden die einzelnen Ergebniswerte auf einfache Weise gebildet, ohne daß der Übertrag und das Vorzeichen explizit rückgewandelt werden müssen.

Da die Verknüpfung von Übertrag und Vorzeichen der Ergebniswerte mathematisch gesehen eine andere Abbildung der Ergebniswerte im Darstellungsraum darstellt, muß zweckmäßigerweise auch die Kennlinie des Quantisierers bzw. des Dekodierers daran angepaßt werden. Eine weitere Ausgestaltung der Erfindung ist dafür dadurch gekennzeichnet, daß der Quantisierer nur in dem Wertebereich der ursprünglichen Bildsignale mit Quantisierungskennlinien arbeitet, die symmetrisch bzw. vielfach symmetrisch bezüglich in gleichem Abstand voneinander liegender Koeffizientenwerte sind. Dadurch ergibt sich gleichzeitig eine bessere Aufrechterhaltung von ausgeprägten Kantenstrukturen im Bild, wie ebenfalls später erläutert wird.

Ein Ausführungsbeispiel einer erfindungsgemäßen Anordnung wird nachstehend anhand der Zeichnung näher erläutert. Es zeigen

Fig. 1 ein grobes Blockschaltbild einer gesamten Anordnung zur Transformation und Rücktransformation von Bildsignalen,

Fig. 2 ein Blockschaltbild einer Transformationsanordnung oder Rücktransformationsanordnung,

Fig. 3 schematisch die Abbildung von Teilen des Wertebereiches der Ergebniswerte auf einen anderen Wertebereich,

Fig. 4a eine Anordnung zur Verknüpfung von zwei Werten sowie ein zusätzliches Verknüpfungselement zur Verwendung in der Transformationsanordnung,

Fig. 4b eine Anordnung zur Verarbeitung von zwei transformierten Werten zur Verwendung in der Rücktransformationsanordnung,

Fig. 5a und b zwei Quantisierkennlinien für zwei verschiedene Koeffizienten.

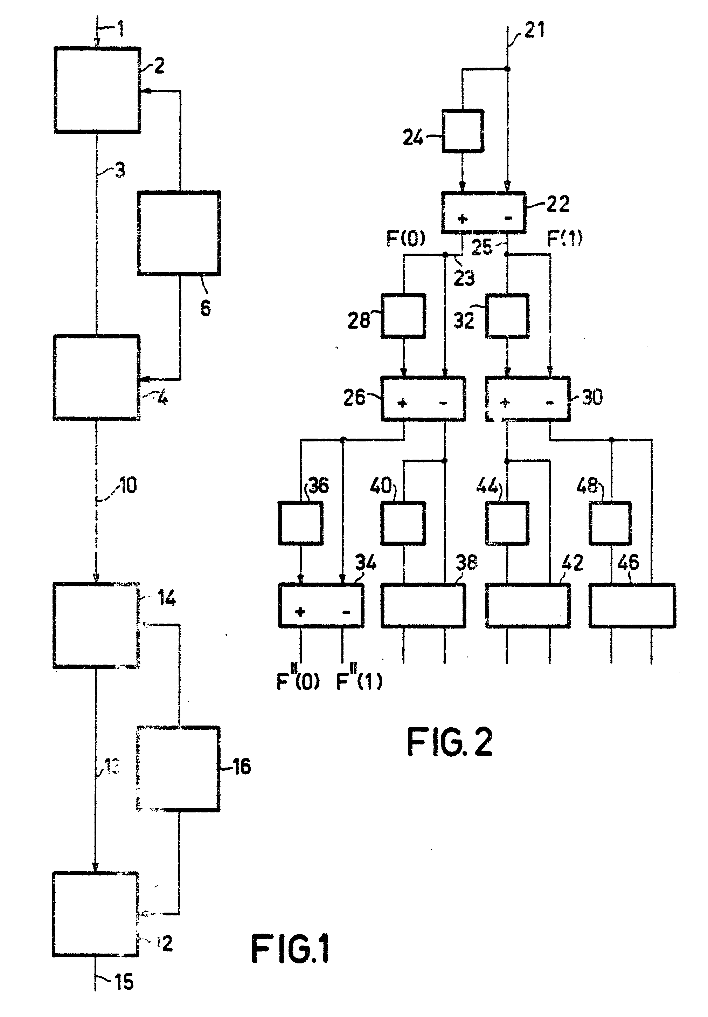

In Fig. 1 werden die Bildsignale über den Eingang 1 zugeführt. Diese Bildsignale können direkt vom Bildabtaster wie beispielsweise eine Fernsehaufnahme einrichtung geliefert werden, jedoch ist es allgemein zweckmäßiger, die Bildsignale eines Bildes in einem Speicher zwischenzuspeichern, da ein größeres Bild allgemein in aufeinanderfolgenden, meist quadratischen Unterbildern nacheinander transformiert und übertragen wird. Diese Möglichkeit ist jedoch nicht dargestellt, da sie für die Erfindung nicht von Belang ist.

Die über die Leitung 1 zugeführten Bildsignale werden in der Transformationsanordnung 2 entsprechend dem gewünschten Transformations-Algorithmus unter Steuerung der Steuereinheit 6 transformiert, und die transformierten Werte bzw. die Koeffizienten werden über die Leitung 3 dem Quantisierer 4 zugeführt, der ebenfalls von der Steuereinheit 6 gesteuert wird. Die quantisierten Werte werden der Übertragungsstrecke 10 zugeführt. Statt der Übertragungsstrecke kann insbesondere auch ein Speicher verwendet werden.

Die übertragenen bzw. aus dem Speicher ausgelesenen Werte werden auf der Empfangsseite einem Dekodierer 14 zugeführt, wo den einzelnen quantisierten Werten ein mittlerer Koeffizientenwert zugeordnet wird, der zu der durch diesen Wert angegebenen Quantisierungsstufe gehört. Die dekodierten Koeffizientenwerte werden über die Leitung 13 der Rücktransformationsanordnung 12 zugeführt, so daß am Ausgang 15 im wesentlichen die ursprünglichen, dem Eingang 1 zugeführten Bildsignale erscheinen.

Die Steuerung des Dekodierers 14 und der Rücktransformationsanordnung 12 erfolgt durch die Steuereinheit 16, die auch den Kennlinienspeicher für die Zuordnung von Eingangswerten zu Koeffizientenwerten in dem Dekodierer 14 enthält, ebenso wie die Steuereinheit 6 auf der Sendeseite den Kennlinienspeicher für den Quantisierer 4 enthält.

Der allgemeine Aufbau einer Transformationsanordnung 2, eines Quantisierers 4, eines Dekodierers 14 und einer Rücktransformationsanordnung 12 ist grundsätzlich bekannt, wobei der Aufbau der Transformationsanordnungen auch bei einem gegebenen Transformations-Algorithmus unterschiedlich sein kann.

Für die weitere Erläuterung soll zunächst der mathematische Hintergrund angedeutet werden, und zwar anhand einer Walsh-Hadamard-Transformation. Als Grundschritt wird dabei eine 2-Punkt-Transformation von jeweils zwei Bildpunkten A und B durchgeführt :

$$\begin{bmatrix} F(1) \\ F(2) \end{bmatrix} = H_2 \begin{bmatrix} A \\ B \end{bmatrix} \tag{1}$$

mit

$$H_2 = \begin{bmatrix} 1 & 1 \\ 1 & -1 \end{bmatrix} \tag{2}$$

3

Die dabei entstehenden transformierten Signale bzw. Koeffizienten lauten ohne Normierung wie eingangs bereits angegeben

$$F(0) = A + B \qquad (3)$$
$$F(1) = A - B$$

Diese Koeffizienten können also leicht mit Hilfe üblicher technischer Arithmetikbausteinen bestimmt werden, die nur für die Verarbeitung von jeweils zwei Werten aufgebaut sind.

Eine Walsh-Hadamard-Transformation für ein ganzes Bild bzw. Unterbild von 2n ($n = 2^N$, $N = 1, 2, ...$) Bildpunkten läßt sich schrittweise aus dem angegebenen Grundschritt in folgender Weise ableiten

$$H_{2n} = \begin{bmatrix} H_n & H_n \\ H_n & -H_n \end{bmatrix} \qquad (4)$$

Es werden also jeweils zwei aus verschiedenen Grundtransformationsschritten gebildete Koeffizienten mit einem solchen Grund-Transformationsschritt weiterverarbeitet usw., bis schließlich in jedem transformierten Signal alle Bildpunkte des genannten Bildes bzw. Unterbildes berücksichtigt sind. Die Transformation erfolgt also in mehreren Stufen. Es sind selbstverständlich auch Anordnungen denkbar, bei denen die Matrizenmultiplikation quasi parallel durchgeführt wird, jedoch ist dafür ein außerordentlich großer Aufwand erforderlich, der sich nur bei ganz extremen Geschwindigkeitsanforderungen rechtfertigt. Die normalerweise praktisch durchgeführten Transformationen lassen sich dagegen stets auf die schrittweise Verarbeitung von jeweils zwei Werten zurückführen.

Eine Anordnung zu einer derartigen Durchführung einer Walsh-Hadamard-Transformation ist in Fig. 2 dargestellt. Von den am Eingang 21 zugeführten Signalen wird jedes zweite Signal im Zwischenspeicher 24 zwischengespeichert, so daß am Eingang der Recheneinheit 22 jeweils zwei aufeinanderfolgende Signalwerte anliegen. Die Recheneinheit 22 bildet bei der Walsh-Hadamard-Transformation jeweils die Summe und die Differenz dieser beiden Werte und gibt die Ergebnisse an den entsprechend bezeichneten beiden Ausgängen 23 und 25 ab. Diese Ausgangswerte entsprechen den in der Gleichung (3) angegebenen Koeffizienten F(0) und F(1), die in Fig. 2 angegeben sind.

Von den Ausgangswerten am Ausgang 23 wird jeweils der erste Wert im Zwischenspeicher 28 zwischengespeichert und dann dem einen Eingang der Recheneinheit 26 zugeführt, während der zweite Ausgangswert des Ausganges 23 dem anderen Eingang der Recheneinheit 26 direkt zugeführt wird. Der entsprechende Vorgang wird mit den Ausgangswerten am Ausgang 25 durchgeführt, von denen jeweils der erste Wert im Speicher 32 zwischengespeichert und dann zusammen mit dem jeweils zweiten Wert parallel der Recheneinheit 30 zugeführt wird. Die Recheneinheit 26 und 30 sind in völlig gleicher Weise aufgebaut wie die Recheneinheit 22 sowie auch die folgenden Recheneinheiten 34, 38, 42 und 46.

An den Ausgängen der Recheneinheiten 26 und 30 erscheinen dann Ausgangswerte, die den Koeffizienten eines Unterbildes aus 2 × 2 Bildpunkten entsprechen. Auch diese Ausgangswerte werden abwechselnd über die Zwischenspeicher 36, 40, 44 oder 48 bzw. direkt den Recheneinheiten 34, 38, 42 und 46 zugeführt. Diese Recheneinheiten erzeugen an den Ausgängen die Koeffizienten F"(0), F"(1) ... eines Unterbildes mit 4 × 2 Bildpunkten.

Diese Anordnung läßt sich beliebig weiter fortsetzen, so daß entsprechend große Unterbilder' transformiert und die Koeffizientenwerte parallel abgegeben werden. Da die Recheneinheit 22 jedoch nur bei jedem zweiten zugeführten Bildsignal parallel zwei Ausgangssignale abgibt und dies für alle folgenden Recheneinheiten gilt, kann es zweckmäßig sein, alle Ausgangssignale der Recheneinheit 22 für ein Unterbild vorgegebener Größe zwischenzuspeichern und nach Verarbeitung aller Bildsignale dieses Unterbildes den Eingang der Recheneinheit 22 auf den Ausgang dieses Zwischenspeichers umzuschalten und diesen Vorgang für jede Stufe entsprechend der vorgegebenen Unterbildgröße zu wiederholen. Für eine solche, nach dem sogenannten « Pipeline-Prinzip » arbeitende Anordnung ist eine spezielle Steuerung mit einem besonderen Adressengenerator notwendig, jedoch ergibt sich der Vorteil, daß nur eine einzige Recheneinheit benötigt wird.

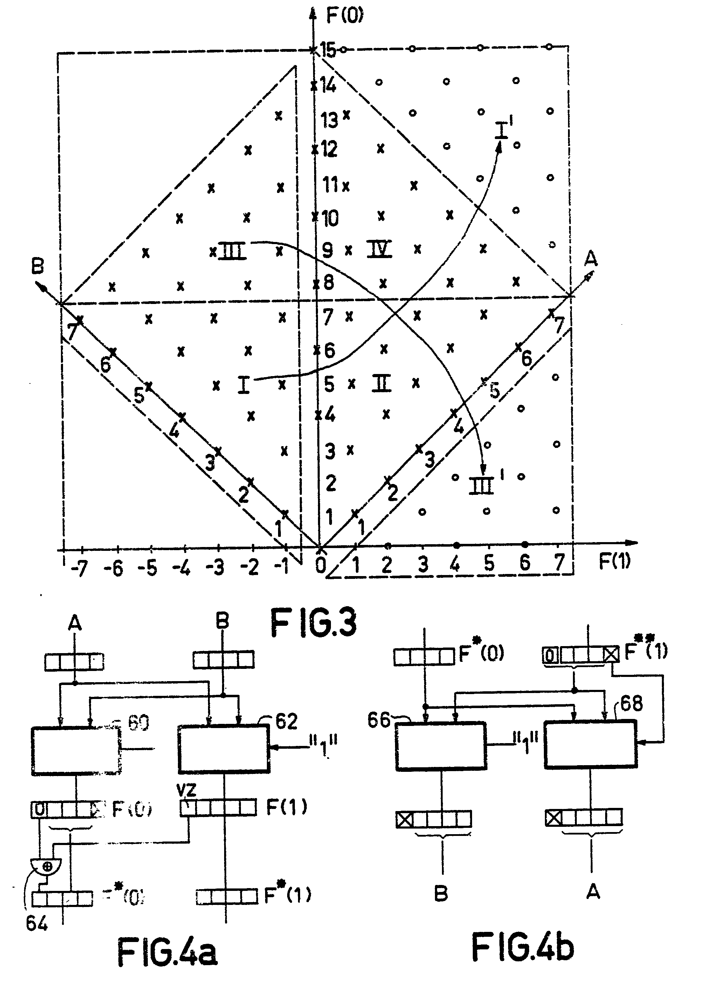

Um zu vermeiden, daß in jeder Recheneinheit bzw. bei jeder Stufe der Verarbeitung eine Verdoppelung des Wertebereiches der Ausgangssignale gegenüber dem Wertebereich der Eingangssignale auftritt, wird nun eine andere Abbildung der Ergebniswerte vorgenommen, wie anhand der Fig. 3 erläutert werden soll. Die schrägliegenden Koordinaten A und B geben die möglichen Eingangswerte einer Recheneinheit an. Die daraus gebildeten Walsh-Hadamard-Koeffizienten F(0) un F(1) sind in dem senkrechtstehenden Koordinatensystem angegeben. Daraus ist zu ersehen, daß zunächst die Koeffizienten F(0) und F(1) je einen Wertebereich von 2 G aufweisen, wenn der Wertebereich der zugeführten Signale A und B gleich G ist. Die Vergrößerung des Wertebereiches entsteht dadurch, daß bei der Summenbildung ein Übertrag und bei der Differenzbildung ein negatives Vorzeichen auftreten kann. Andererseits ist aus Fig. 3 zu erkennen, daß die durch Kreuze angegebenen Wertekombinationen der Koeffizienten F(0) und F(1), die durch alle Kombinationen der Eingangswerte A und B gebildet werden, nicht alle möglichen Wertekombinationen der Koeffizienten innerhalb ihres gesamten Wertebereiches umfassen. Das bedeutet, daß die Koeffizienten in ihrer Darstellung eine durch die Transformation selbst erzeugte Redundanz enthalten. Diese wird nachfolgend näher bestimmt. Aus der Gleichung (3) folgt, daß die Koeffizienten F(0) und F(1) entweder beide gerade oder beide ungerade sind. Bei Dualdarstellung dieser Werte stimmen diese also stets in dem Bit niedrigster Wertigkeit überein, so daß dies nur von einem Koeffizienten berücksichtigt werden muß.

Ferner ergibt sich aus Fig. 3, daß die durch Kreuze angegebenen Wertekombinationen der Koeffizienten F(0) und F(1) eine Unschärferelation der folgenden Form erfüllen :

$$|F(0) - G| + |F(1)| \leq G \tag{5}$$

Diese letztere Beziehung beschreibt die Anordnung der tatsächlich auftretenden, durch Kreuze bezeichneten Wertekombinationen der beiden Koeffizienten F(0) und F(1) in Form eines auf der Spitze stehenden Quadrates, so daß von dem gestrichelt gezeichneten äußeren Quadrat, das die Gesamtzahl der darstellbaren Wertekombinationen umfaßt, die Bereiche in den Ecken nicht besetzt sind, so daß die Anzahl der darstellbaren Wertekombinationen einen Bereich umfassen, der einer Verdoppelung des Bereiches der tatsächlich auftretenden Wertekombinationen der Koeffizienten F(0) und F(1) entspricht. Eine weitere Verdoppelung ist dadurch gegeben, daß im darstellbaren Wertebereich auch Kombinationen von Koeffizienten vorhanden sind, von denen der eine gerade und der andere ungerade ist, während bei den tatsächlich auftretenden Wertekombinationen gemäß der Gleichung (3) die Koeffizienten jeweils nur beide gerade oder beide ungerade sein können.

Diese Einschränkung der Wertekombinationen der beiden Koeffizienten lassen sich nun dazu benutzen, transformierte Koeffizienten zu bilden, deren Wertebereich gegenüber dem der zugeführten Eingangswerte A und B nicht vergrößert ist. Dazu werden zumindest ein Teil der zunächst gebildeten Koeffizienten in einem anderen Bereich des in Fig. 3 dargestellten Ereignisfeldes abgebildet. Es sind verschiedene Abbildungen möglich. Jede dieser Abbildungen beruht auf einer Einteilung des ursprünglichen, in Fig. 3 dargestellten Ereignisfeldes in vier Bereiche I, II, III und IV, die durch den Übertrag des Summenkoeffizienten F(0) und durch das Vorzeichen des Differenzkoeffizienten F(1) bestimmt werden. Dabei wird davon ausgegangen, daß die Darstellung der Differenz A — B für den Differenzkoeffizienten F(1) im Zweierkomplement erfolgt :

$$F(1) = A - B + G \tag{6}$$

mit G = Anzahl der Werte der Variablen A bzw. B.

Dadurch werden positive Differenzen durch 1 Bit mit dem Wert « 1 » in der Stelle höchster Wertigkeit dargestellt, das als Vorzeichenbit VZ bezeichnet wird, und negative Differenzen enthalten den Wert « 0 » in der Bitstelle höchster Wertigkeit. Bei dem Summenkoeffizienten F(0) gibt die Bitstelle höchster Wertigkeit den Übertrag Ü an. Durch Verknüpfung des Übertragbits Ü und des Vorzeichenbits VZ der Koeffizienten F(0) und F(1) können verschiedene Abbildungen realisiert werden, so daß der gesamte darzustellende Wertebereich beider Koeffizienten zusammen halbiert wird. Durch zusätzliche Ausnutzung der ersten Bedingung, d. h. der Eigenschaft, daß nur beide Koeffizienten gerade oder ungerade sein können, ergeben sich modifizierte Koeffizienten, deren Wertebereich gleich dem der zugeführten Werte A und B ist. Bei einer solchen Abbildung entsteht kein Informationsverlust, so daß durch eine entsprechende Rücktransformation die Bildpunkte exakt rekonstruiert werden können.

In Fig. 3 ist ein Abbildungsverfahren angedeutet, bei dem der Bereich I nach rechts oberhalb des Bereiches IV und der Bereich III nach rechts unterhalb des Bereiches II verschoben ist. Die dadurch entstehenden modifizierten Koeffizienten F*(0) und F*(1) werden also entsprechend der nachstehenden Tabelle 1 gebildet, wobei für die Differenzbildung von der bereits angegebenen Darstellung im Zweierkomplement ausgegangen wird :

<div align="center">Tabelle 1</div>

|       | F(0)      | F(1)       | Ü + VZ | F*(0)        | F*(1)        |
|-------|-----------|------------|--------|--------------|--------------|
| I     | Ü = 0     | VZ = 0     | 1      | $A+B+2^4$    | $A-B+2^4$    |
| II    | Ü = 0     | VZ = 1     | 0      | $A+B$        | $A-B$        |
| III   | Ü = 1     | VZ = 0     | 0      | $A+B+2^4$    | $A-B+2^4$    |
| IV    | Ü = 1     | VZ = 1     | 1      | $A+B$        | $A-B$        |

Dabei ist anders als in Fig. 3 hier von einer Anzahl $G = 2^4 = 16$ Werten der Eingangsvariablen A und B ausgegangen. Die Verschiebung ist also durch eine Exklusiv-NOR-Verknüpfung des Übertragbits Ü und des Vorzeichenbits VZ gebildet.

**0 077 089**

Eine Schaltungsanordnung, die eine solche Abbildung der Koeffizienten verwirklicht und die für jede der Recheneinheiten 22, 26, 30 usw. in Fig. 2 verwendet werden kann, ist in Fig. 4a dargestellt. Die beiden zugeführten Signale A und B werden als Vier-Bit-Dualworte angenommen, was durch den Block mit vier Kästchen im Signalweg angedeutet ist. Diese beiden Signale werden sowohl einer Addiereinheit 60 als auch einer Subtrahiereinheit 62 zugeführt, wobei der Subtrahiereinheit 62 ein Übertragsignal mit dem Wert « 1 » fest zugeführt wird, um die entsprechende Differenzdarstellung im Zweierkomplement zu erhalten. Die Ausgangswerte der beiden Einheiten 60 und 62 stellen die Koeffizienten F(0) und F(1) dar, die durch Dualworte mit fünf Bit dargestellt sind. Bei dem Koeffizienten F(0) gibt das Bit Ü an der Stelle höchster Wertigkeit den Übertrag und bei dem Koeffizienten F(1) das Bit VZ an der Stelle höchster Wertigkeit das Vorzeichen an.

Diese beiden Bits werden nun den Eingängen eines Exklusiv-NOR-Gatters bzw. Äquivalenz-Gatters 64 zugeführt, und das Ausgangssignal dieses Gatters ersetzt das Übertragbit Ü bei dem Koeffizienten F(0). Ferner wird das mit einem Kreuz versehene Bit niedrigster Wertigkeit dieses Koeffizienten weggelassen, da das entsprechende Bit des anderen Koeffizienten F(1) den gleichen Wert hat. Damit ist der modifizierte Koeffizient F*(0) entstanden, der lediglich vier Bit lang ist, d. h. die gleiche Anzahl Informationseinheiten enthält wie die zugeführten Werte A und B. Beim Koeffizienten F(1) wird das Vorzeichenbit nicht weitergeführt, da es bereits indirekt in dem höchstwertigen Bit des modifizierten Koeffizienten F*(0) enthalten ist, sondern es werden nur die letzten vier Bits als modifizierter Koeffizient F*(1) weitergegeben. Damit hat auch dieser Koeffizient die gleiche Anzahl Informationseinheiten wie die zugeführten Werte A und B. Insgesamt entstehen damit die Koeffizienten F*(0) und F*(1) nach Tabelle 1, welche die gleiche Anzahl Informationseinheiten enthalten wie die zugeführten Werte A und B. Wenn also die Recheneinheiten 22, 26, 30 usw. in Fig. 2 durch eine Anordnung gemäß Fig. 4a verwirklicht werden, ist es klar, daß auch bei einer längeren Kaskadierung von Recheneinheiten für die Transformation eines größeren Unterbildes keine Vergrößerung der Wortlänge der Koeffizienten entsteht.

Die Rücktransformationseinheit 12 in Fig. 1 ist ähnlich aufgebaut wie die Transformationseinheit 2, bei Verwendung der Walsh-Hadamard-Transformation sind die beiden Anordnungen sogar identisch. Es werden also ebenfalls durch schrittweise Verarbeitung jeweils zweier Koeffizienten schließlich wieder im wesentlichen, abgesehen von den Quantisierfehlern, die ursprünglichen Bilddaten erzeugt. Bei Verwendung der modifizierten Koeffizienten, die durch die Anordnung gemäß Fig. 4a erzeugt werden, ist allerdings auch eine modifizierte Rücktransformation erforderlich.

Zunächst soll der mathematische Hintergrund der Rücktransformation der modifizierten Koeffizienten erläutert werden. Bei Verwendung der Walsh-Hadamard-Transformation wird wie erwähnt in gleicher Weise wie bei der Transformation jeweils die Summe und die Differenz zweier Koeffizienten bzw. bei den folgenden Schritten zweier Zwischenwerte gebildet. Unter Berücksichtigung der modifizierten Koeffizienten ergibt sich nun für die rücktransformierten Werte A und B, die hier also nicht unmittelbar die zurücktransformierten Bildsignale darstellen, sondern die Ergebniswerte bei jedem Zwischenschritt, die in der folgenden Tabelle 2 dargestellte Berechnung :

Tabelle 2

| A | B |
|---|---|
| Bereich I:   $1/2 \cdot (A+B+2^4)$ | $1/2(A+B+2^4)$ |
| $+1/2 \cdot (A-B+2^4)$ | $-1/2(A-B+2^4)+2^4$ |
| $A+2^4$ | $B+2^4$ |
| Bereich II+IV:  $1/2(A+B)$ | $1/2(A+B)$ |
| $+1/2(A-B)$ | $-1/2(A-B)+2^4$ |
| $A$ | $B+2^4$ |
| Bereich III:  $1/2(A+B-2^4)$ | $1/2(A+B-2^4)$ |
| $+1/2(A-B+2^4)$ | $-1/2(A-B+2^4)+2^4$ |
| $A$ | $B$ |

Die Werte, die dabei in den einzelnen Bereichen verknüpft werden, ergeben sich aus der Tabelle 1. Der Faktor 1/2 ergibt sich bei dem Summenkoeffizient F*(0) dadurch, daß das Bit niedrigster Wertigkeit weggelassen ist. Bei dem Differenzkoeffizienten F*(1) ergibt sich der Faktor 1/2 ebenfalls dadurch, daß das Bit niedrigster Wertigkeit abgetrennt und abweichend von den anderen Bits verarbeitet wird, wie

6

anschließend anhand einer technischen Verwirklichung in Form einer Recheneinheit zur Durchführung der vorstehend beschriebenen arithmetischen Verknüpfung erläutert wird. Aus der Tabelle 2 ergibt sich, daß bei dieser Rücktransformation, bei der wieder die Subtraktion im Zweierkomplement durch Addition des Wertes $2^4$ zur Differenz verwendet wird, die ursprünglichen Werte A und B unmittelbar zurückgewonnen werden, wobei lediglich bei Koeffizienten aus bestimmten Bereichen gemäß der Fig. 3 ein Übertrag in Form des Summanden $2^4$ auftritt, der also durch Begrenzen der Ausgangswerte auf die letzten vier Bits der bei der Verarbeitung entstehenden Datenworte einfach eliminiert werden kann.

Eine derartige Recheneinheit ist in Fig. 4b dargestellt. Auch diese enthält wieder eine Addiereinheit 68 und eine Subtrahiereinheit 66, denen parallel jeweils zwei dekodierte Koeffizienten oder Zwischenwerte zugeführt werden, von denen der eine Koeffizient, der hier mit $F^*(0)$ bezeichnet ist, bei der Transformation zuletzt aus einer Addition entstanden ist und der andere Koeffizient, der hier mit $F^{**}(1)$ bezeichnet ist, bei der Transformation zuletzt aus einer Subtraktion entstanden ist. Dieser letztere Koeffizient ist aus dem Koeffizienten $F^*(1)$ dadurch entstanden, daß dieser um ein Bit in der höchstwertigen Stelle verlängert worden ist, wobei dieses zusätzliche Bit den Wert « 0 » hat. Von dem Koeffizienten $F^{**}(1)$ werden nun die vier höchstwertigen Bits gemeinsam mit den vier Bits des Koeffizienten $F^*(0)$ sowohl der Subtrahiereinheit 66 als auch der Addiereinheit 68 zugeführt, wobei letztere als Übertragsignal das Bit niedrigster Wertigkeit des Koeffizienten $F^{**}(1)$ erhält, während die Subtrahiereinheit 66 als Übertragsignal ständig ein Signal mit dem Wert « 1 » erhält. Es könnte zunächst angenommen werden, daß das Bit niedrigster Wertigkeit des modifizierten Koeffizienten $F^{**}(1)$ auch dem modifizierten Koeffizienten $F^*(0)$ wieder zugeführt werden müßte. Da dann aber bei der Addition in der letzten Stelle zwei wertgleiche Bits addiert werden, würde ein Übertrag auftreten, wenn diese den Wert « 1 » haben. Aus diesem Grunde wird dieses Bit daher nur als Übertragsignal der Addiereinheit 68 zugeführt. Für die Subtrahiereinheit 66 ist dagegen der Wert dieses Bits ohne Bedeutung und wird dort nicht verarbeitet.

Von den Ausgangssignalen der Einheiten 66 und 68 wird das höchstwertige Bit, das einen Übertrag enthalten kann, abgetrennt und nicht weiterverarbeitet, da die vier unteren Bits unmittelbar den gesuchten Wert angeben, wie anhand der Tabelle 2 bereits erläutert wurde. Auf diese Weise ist es also möglich, auch bei der Rücktransformation eine Vergrößerung der Wortbreite zu vermeiden, wobei die beiden Einheiten 66 und 68 jeweils nur die Anzahl Bits verarbeiten müssen, die auch die zugeführten modifizierten Koeffizienten enthalten.

Da eine vollständige Walsh-Hadamard-Transformation auf einer größeren Anzahl von Bildpunkten entsprechend Gleichung (4) schrittweise aus der 2-Punkt-Transformation abgeleitet werden kann, kann auch bei der Rücktransformation jeder Ergebniswert wieder als modifizierter Koeffizient der nächsten Stufe aufgefaßt und in genau gleicher Weise weiterverarbeitet werden. Damit wird sowohl bei der Transformation als auch bei der Rucktransformation ein Überschreiten der Wortlänge vermieden, so daß die Recheneinheiten jeweils nur für die geringstmögliche Wortlänge ausgelegt sein müssen. Weiterhin ergibt sich, da die endgültig zu quantisierenden Koeffizienten die gleiche Wortlänge haben wie die der zugeführten Bildsignale, eine wesentliche Vereinfachung und eine bessere Wirksamkeit der Quantisierung und damit auch der Datenreduktion.

Darüber hinaus entsteht auch noch ein zusätzlicher Gewinn bei der Quantisierung, wodurch mit vergleichbarem Aufwand eine genauere Darstellung der quantisierten Werte erreicht werden kann. Durch Quantisierungskennlinien, die dem entwickelten Verfahren speziell angepaßt sind, werden auch große Werte der Transformationskoeffizienten jeder einzelnen Transformationsstufe genau dargestellt, so daß auch ausgeprägte Kantenstrukturen im Bild besser wiedergegeben werden, als bei herkömmlichen Verfahren. Dies soll nachstehend anhand von zwei Beispielen näher erläutert werden.

Zunächst sei eine 2-Punkt-Grundtransformation der beiden Bildpunkte A und B betrachtet, die je einen aus einer Anzahl G Werte annehmen können. Diese Transformation führt zu den in Gleichung (3) angegebenen beiden Koeffizienten F(0) und F(1). Bei den bisher üblichen Verfahren wird der Summenkoeffizient F(0) unverändert übertragen, während der Differenzkoeffizient F(1), der also auch negative Werte annehmen kann, zur Datenkompression durch eine nichtlineare, zum Nullpunkt symmetrische Kennlinie quantisiert und anschließend mittels einer geringeren Anzahl von Informationseinheiten übertragen bzw. gespeichert wird. Die Nichtlinearität wird so gewählt, daß häufig auftretende kleine Differenzen fein quantisiert werden, während weniger häufig auftretende große Differenzwerte entsprechend gröber quantisiert werden.

Bei der Verwendung der beschriebenen modifizierten Koeffizienten wird dagegen das Vorzeichen des Differenzkoeffizienten F(1) abgetrennt und nicht übertragen. Durch die Streichung des Vorzeichens ergibt sich bei der Differenzbildung durch die Darstellung im Zweierkomplement die folgende Abbildung :

Kleine negative Differenzen ergeben große positive Differenzen, große negative Differenzen ergeben kleine positive Differenzen.

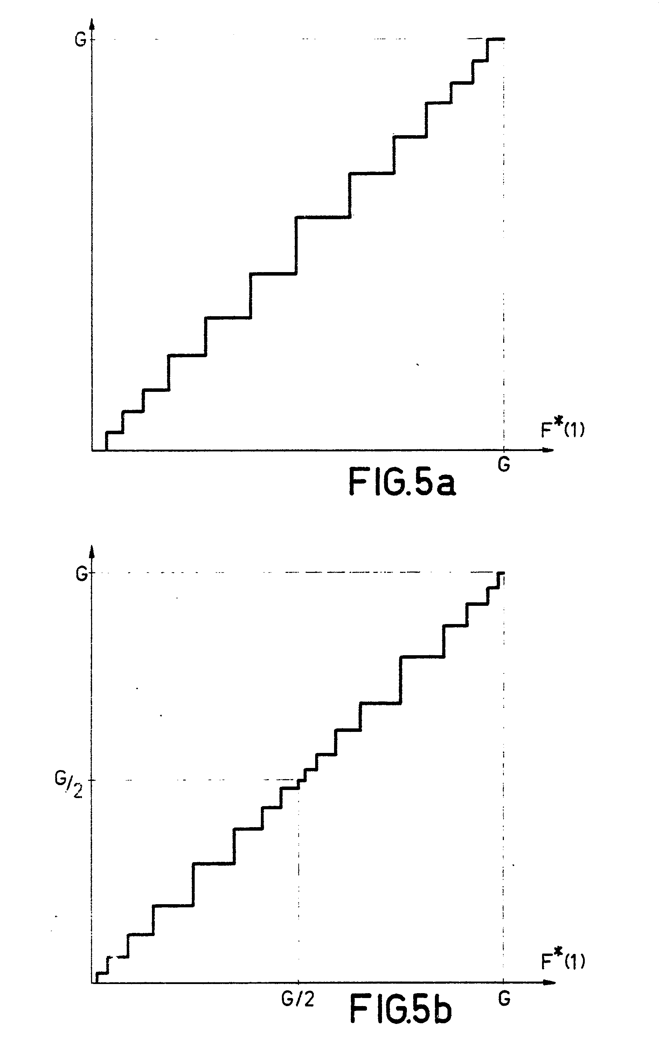

Die Bedingung, daß kleine positive Differenzen sowie kleine negative Differenzen wegen ihrer größeren Auftrittswahrscheinlichkeit in feinen Stufen quantisiert werden müssen, führt zu einer symmetrischen Quantisierungskennlinie, die in Fig. 5a dargestellt ist. Diese Quantisierungskennlinie ergibt außerdem noch einige zusätzliche Vorteile.

Der erste Vorteil entsteht daraus, daß der Quantisierer bei dem Differenzkoeffizienten nur positive Werte verarbeiten muß. Bei Verwendung einer stark nichtlinearen Quantisierung mit einer sehr feinstufigen Quantisierung im Bereich betragsmäßig kleiner Differenzen ist die Anzahl der reduzierten Informationseinheiten im wesentlichen durch die feinstufige Quantisierung gegeben. Für die Quantisierungskennlinie nach Fig. 5a ist dann durch die erforderliche Symmetrie eine allerdings nur fast doppelt genaue Quantisierung in der Hälfte des ursprünglichen Bereiches erforderlich, so daß sich in diesem Falle nur ein geringer Gewinn für die Datenkompression bei gleichbleibendem Quantisierungsfehler ergibt, wenn dieses mit der entsprechenden Quantisierung der bereits genannten, zum Nullpunkt symmetrischen Kennlinie üblicher Art verglichen wird. Im anderen Fall einer linearen Quantisierung ergibt sich für die modifizierten Koeffizienten jedoch ein Gewinn mit dem Faktor 2, da die gleiche Stufenzahl der Quantisierung nur in der Hälfte des ursprünglichen Bereiches verwendet wird. Damit ergibt sich für die modifizierten Koeffizienten ein Gewinn mit einem Faktor zwischen 1 und 2.

Ein zweiter Vorteil ergibt sich daraus, daß aufgrund der symmetrischen nichtlinearen Quantisierungskennlinie betragsmäßig große Werte des Differenzkoeffizienten genauer dargestellt werden, so daß auch ausgeprägte Kantenstrukturen, d. h. steile Übergänge im Bild besser wiedergegeben werden als bei herkömmlichen Verfahren. Als zweites Beispiel sei eine Walsh-Hadamard-Transformation eines Unterbildes mit vier Bildpunkten A, B, C und D betrachtet, die durch zweimalige Anwendung der Grundtransformation gemäß Gleichung (1) und (4) durchgeführt werden kann. Wenn bei jeder Ausführung der Grundtransformation die modifizierten Werte gemäß der Tabelle 1 gebildet werden, wodurch keine Vergrößerung der Wortlänge entsteht, ergeben sich die folgenden vier Koeffizienten :

$$F*(0) = [(A + B)* + (C + D)*]*$$
$$F*(1) = [(A + B)* - (C + D)*]*$$
$$F*(2) = [(A - B)* + (C - D)*]*$$
$$F*(3) = [(A - B)* - (C - D)*]*$$

Der Summenkoeffizient F*(0) wird wiederum unverändert übertragen. Bei dem Koeffizienten F*(1) ist zu berücksichtigen, daß bei dem ersten Transformationsschritt das den Übertrag darstellende höchstwertige Bit der Summen A + B bzw. C + D durch die Äquivalenz-Funktion nach Tabelle 1 verändert und das Bit niedrigster Wertigkeit abgetrennt wird, was bei der anschließenden Subtraktion zu berücksichtigen ist. Die eigentliche Subtraktion im zweiten Transformationsschritt erfordert dann wiederum eine symmetrische Kennlinie nach Fig. 5a, so daß insgesamt die in Fig. 5b dargestellte doppelt symmetrische Kennlinie entsteht. Die gleiche Quantisierungscharakteristik ergibt sich für den Koeffizienten F*(2). Der Koeffizient F*(3), der durch eine zweimalige Differenzbildung entsteht, benötigt wiederum nur die einfach symmetrische Kennlinie gemäß Fig. 5a. Auch in diesem Beispiel ergibt sich durch die Bildung der modifizierten Koeffizienten für den Quantisierer ein Gewinn, da dieser nur Koeffizienten mit einem Wertebereich gleich dem der ursprünglichen Bildsignale verarbeiten muß. Zusätzlich werden durch die Symmetrie der Quantisierungskennlinie auch ausgeprägte Kantenstrukturen im Bild besser wiedergegeben.

Dies gilt auch für die Transformation von größeren Unterbildern mit entsprechend mehr Bildpunkten, die entsprechend mehr Stufen mit der Durchführung der Grundtransformation erfordert. Die dabei entstehenden Koeffizienten werden dann mittels symmetrischer bzw. vielfachsymmetrischer nichtlinearer Quantisierungskennlinien quantisiert, die entsprechend den beiden beschriebenen Beispielen der Folge der einzelnen Transformationsschritte nach Tabelle 1 anzupassen sind.

## Patentansprüche

1. Anordnung zum Speichern oder Übertragen und zum Rückgewinnen von Bildsignalen, bei der aus den durch punktweise Abtastung eines Bildes gewonnenen Bildsignalen in einer Transformationsanordnung transformierte Koeffizientenwerte gewonnen und diese in einem Quantisierer in quantisierte Werte umgewandelt werden und die quantisierten Werte nach Speicherung oder Übertragung in einem Dekodierer dekodiert und die dekodierten Werte in einer Rücktransformationsanordnung in Bildsignale zurückverwandelt werden, die den ursprünglichen Bildsignalen weitgehend entsprechen, wobei die Transformationsanordnung und die Rücktransformationsanordnung jeweils zwei Bildsignale bzw. dekodierte Werte entsprechend dem Transformations-Algorithmus zu zwei Ergebniswerten verknüpft und die Ergebniswerte verschiedener Verknüpfungen jeweils stufenweise weiter verknüpft, dadurch gekennzeichnet, daß die Transformationsanordnung (2) mindestens ein zusätzliches Verknüpfungselement (64) aufweist, das das Übertragsignal des bei jeder Verknüpfung entstehenden einen Ergebniswertes und das Vorzeichensignal des anderen Ergebniswertes erhält und am Ausgang ein Hilfssignal erzeugt, das dem einen Ergebniswert als höchstwertiges Bit zugeführt wird, wobei das Bit niedrigster Wertigkeit dieses Ergebniswertes sowie das Übertragsignal und das Vorzeichensignal der Ergebniswerte für die Speicherung oder Übertragung unterdrückt werden.

2. Anordnung nach Anspruch 1, dadurch gekennzeichnet, daß die Transformationsanordnung (2) die beiden Ergebniswerte jeder Verknüpfung aus der Summe und der Differenz zweier Werte bildet, daß das zusätzliche Verknüpfungselement (64) ein Exklusiv-ODER-Glied ist und daß die Rücktransformationsanordnung (12) jeweils einen ersten, das Bit niedrigster Wertigkeit noch enthaltenden dekodierten Wert mit einem zweiten, das Hilfssignal noch enthaltenden dekodierten Wert verknüpft und dabei die Bits des ersten Wertes um eine Stelle zur niedrigeren Wertigkeit verschiebt und der vorherigen Bitstelle höchster Wertigkeit den Wert « 0 » zuordnet und das Bit niedrigster Wertigkeit als Übertragsignal für die niedrigste Stelle bei der Summenbildung verarbeitet.

3. Anordnung nach Anspruch 1 oder 2, dadurch gekennzeichnet, daß der Quantisierer nur in dem Wertebereich der ursprünglichen Bildsignale mit Quantisierungskennlinien arbeitet, die symmetrisch bzw. vielfach symmetrisch bezüglich in gleichem Abstand voneinander liegender Koeffizientenwerte sind.

**Claims**

1. An arrangement for storing or transmitting and recovering picture signals, in which from the picture signals obtained by element-sequential scanning of a picture, transformation coefficients are obtained in a transformation arrangement and these coefficients are converted in a quantizing device into quantized values and the quantized values are decoded in a decoder after storage or transmission and the decoded values are reconverted in a retransformation device into picture signals which to a large extent correspond to the original picture signals, the transformation arrangement and the retransformation arrangement always combining in accordance with the transformation alforithm two picture signals or decoded values, respectively, and still further combining step-wise the resultant values of several combining operations, characterized in that the transformation arrangement (2) includes at least one additional logic circuit (64) to which the carry signal of one resultant value obtained in each combining operation and the sign signal of the other resultant value are applied and which at the output produces an auxiliary signal which is added as the most significant bit to one resultant value, the least significant bit of this resultant value and also the carry signal and the sign signal of the resultant value for the storage or transmission being suppressed.

2. An arrangement as claimed in Claim 1, characterized in that the transformation arrangement (2) forms the two resultant values of each combining operation from the sum and the difference of two values, that the additional logic circuit (64) is an exclusive-OR-member and that the retransformation arrangement (12) always combines a first decoded value which still contains the least significant bit with a second decoded value which still contains the auxiliary signal, and that the bit of the first value is shifted through one position towards a lower significance and assigns the value (0) to the previous bit position of the highest significance and processes the least significant bit as a carry signal for the lowest position in the sum formation.

3. An arrangement as claimed in Claim 1 or 2, characterized in that the quantizer operates only in the value range of the original picture signals with quantization characteristics which are symmetrical or multi-symmetrical relative to equi-spaced coefficient values.

**Revendications**

1. Dispositif pour stocker ou transmettre et pour récupérer des signaux d'image, dans lequel des valeurs de coefficients transformées dans un dispositif de transformation sont obtenues à partir de signaux d'image formés par analyse point par point d'une image et sont converties dans un quantificateur en valeurs quantifiées, les valeurs quantifiées sont décodées dans un décodeur après stockage ou transmission, et les valeurs décodées sont reconverties dans un dispositif de transformation inverse en des signaux d'image qui correspondent largement aux signaux d'image originaux, le dispositif de transformation et le dispositif de transformation inverse combinant chaque fois deux signaux d'image ou valeurs décodées selon l'algorithme de transformation en deux valeurs de résultat et combinant chaque fois à nouveau par stades successifs les valeurs de résultat de plusieurs combinaisons, caractérisé en ce que le dispositif de transformation (2) comporte au moins un élément de combinaison logique supplémentaire (64) qui reçoit le signal de transfert de l'une des valeurs de résultat produites à chaque combinaison ainsi que le signal de signe de l'autre valeur de résultat et produit à la sortie un signal auxiliaire qui est appliqué à la première valeur de résultat à titre de bit de poids le plus fort, tandis que le bit de poids le plus faible de cette valeur de résultat ainsi que le signal de transfert et le signal de signe des valeurs de résultat sont supprimés pour le stockage ou la transmission.

2. Dispositif suivant la revendication 1, caractérisé en ce que le dispositif de transformation (2) forme les deux valeurs de résultat de chaque combinaison à partir de la somme et de la différence de deux valeurs, que l'élement de combinaison logique supplémentaire (64) est un élément OU exclusif et que le dispositif de transformation inverse (12) combine chaque fois une première valeur décodée contenant encore le bit de poids le plus faible avec une seconde valeur décodée contenant encore le signal auxiliaire en décalant les bits de la première valeur d'une position vers le poids plus faible, en attribuant à la position de bit précédente de poids le plus fort la valeur « 0 » et en utilisant le bit de poids le plus faible comme signal de transfert pour la position de poids le plus faible lors de la sommation.

3. Dispositif suivant la revendication 1 ou 2, caractérisé en ce que le quantificateur ne travaille que dans le domaine de valeurs des signaux d'image originaux avec des caractéristiques de quantification qui présentent une symétrie ou une symétrie multiple par rapport à des valeurs de coefficients espacées de la même distance les unes des autres.

FIG.1

FIG.2

FIG.3

FIG.4a

FIG.4b

FIG.5a

FIG.5b